(19) Europäisches Patentamt

European Patent Office

Office européen des brevets

(11) **EP 0 982 840 A1**

(12) **EUROPÄISCHE PATENTANMELDUNG**

(43) Veröffentlichungstag:
**01.03.2000 Patentblatt 2000/09**

(51) Int. Cl.[7]: **H02K 47/04**, H02K 3/28,
H02K 1/27

(21) Anmeldenummer: **98115473.5**

(22) Anmeldetag: **18.08.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder:
**Elektromotoren Ingbert Joachim Guttormsson 68766 Hockenheim (DE)**

(72) Erfinder:
**Elektromotoren Ingbert Joachim Guttormsson 68766 Hockenheim (DE)**

(54) **Transportable Wechselstromversorgungsanlage**

(57) Ausgehend von einer transportablen Wechselstromversorgungsanlage, bestehend aus einem einen Anker eines Wechselstromgenerators mit einer aus Spulen bestehenden Statorwicklung anzutreibenden Motor, wird zur Lösung der Aufgabe eine praktisch autarke Wechselstromversorgungsspannung zu ermöglich, erfindungsgemäß vorgeschlagen, daß ein von einer Gleichstromquelle gespeister Gleichstromnebenschlußmotor den Anker eines Wechselstromgenerators (3) mittels Übersetzungsgetriebe, insbesondere Zahnriementrieb, mit einer Ubersetzung von 1,166 antreibt, daß die Anzahl der Magnetpole (37) des Ankers (20) gleich ist der Anzahl der Anzahl der Pole des diesen umgebenden Stators, daß die Spulen (15, 16, 17, 18) der Statorwicklung (14) direkt zu einer Phase zusammengeschaltet sind, und daß der Wechselstromgenerator (3) an seinem elektrischen Ausgang eine Sinuswechselspannung mit praktisch gleicher Frequenz bei vorgegebener Dauerleistung zur Verfügung hält.

FIGUR NR.1

EP 0 982 840 A1

Printed by Xerox (UK) Business Services
2.16.7/3.6

**Beschreibung**

Die Erfindung betrifft eine transportable Wechselstromversorgungsanlage, bestehend aus einem, einen Anker eines Wechselstromgenerators mit einer aus Spulen bestehenden Statorwicklung antreibenden Motor.

Derartige transportable Wechselstromversorgungsanlagen werden im Baustellenbereich zur Notstromversorgung und auch in Notfällen bei der Bergung von Personen sowie deren Versorgung mit Wasser und/ oder Licht eingesetzt. Weitere Einsatzbereiche derartiger transportabler Wechselstromversorgungsanlagen sind ganz allgemein die Industrie, Freizeit und Hobby sowie beim Einsatz von Hilfskräften in der Dritten Welt.

Bisher werden diese transportablen Wechselstromversorgungsanlagen mit Benzinmotoren angetrieben, bei welchen der Wechselstromgenerator starr mit dem Antriebsmotor verbunden ist. Hierbei treten dann beachtliche Schwierigkeiten auf, wenn Engpässe in der Versorgung der erforderlichen Betriebsstoffe auftreten und zwar unabhängig davon, ob es sich bei den Betriebsstoffen um Benzin für kleinere transportable Wechselstromversorgungsanlagen handelt, oder bei größeren um Dieselkraftstoff handelt.

Darüberhinaus ist der in diesen Anlagen dringend erforderliche Wechselstromgenerator wegen seines mehrteiligen Aufbaus reparaturanfällig und wartungsintensiv. Bisher verwendete Wechselstromgeneratoren zur Erzeugung von Wechselstrom beispielsweise für den Antrieb von Winkelschleifern, elektrischen Rütteleinrichtungen oder Bohrhämmern sind in ihrem elektrischen Aufbau durch die Anordnung von Haupt- und Hilfswicklungen und durch den Einsatz von Kondensatoren störanfällig, insbesondere beim Einsatz in der Dritten Welt. Um einen Einsatz dort zu ermöglichen, sind beachtliche Aufwendungen für die Bereithaltung von Ersatzteilen und auch von Antriebsenergie - Benzin, Dieselkraftstoff - zwingend erforderlich, welche zusätzlich einen derartigen Einsatz verteuern, da diese Hilfsstoffe immer wieder erneut zur Verfügung gestellt werden müssen.

Ausgehend hiervon liegt der vorliegenden Erfindung die Aufgabe zugrunde, eine einfache störunanfällige und von einer Lieferung von Hilfsstoffen unabhängige transportable Wechselstromversorgungsanlage zu schaffen. Diese Aufgabe wird gemäß Anspruch 1 dadurch gelöst, daß ein von einer Gleichstromquelle gespeister Gleichstromnebenschlußmotor den Anker eines Wechselstromgenerators mittels Übersetzungsgetriebe, insbesondere Zahnriementrieb, mit einer Übersetzung ins Langsame antreibt, das die Anzahl der Pole des Ankers gleich ist der Anzahl der Pole des diesen umgebenden Stators, daß die Spulen der Statorwicklung direkt zu einer Phase zusammengeschaltet sind und daß der Wechselstromgenerator an seinem elektrishcen Ausgang eine Wechselspannung mit praktisch gleicher Frequenz bei vergegebener Dauerleistung zur Verfügung hält. Durch die Benutzung einer Gleichstromquelle beim Antrieb des erfindungsgemäßen Wechselstromgenerators mit dem erfindungsgemäßen Gleichstromnebenschlußmotor fällt zum einen die Versorgung der transportablen Wechselstromversorgungsanlage durch flüssige oder gasförmige Antriebsstoffe weg und es ist darüberhinaus auch noch eine Versorgung von Werkzeugen mit Wechselstrom möglich, auch wenn die Wechselstromfrequenz nicht genau eingehalten werden kann, sei es durch den augenblicklichen Ladezustand der Gleichstromquelle, oder durch den Anschluß zu vieler Werkzeuge.

Eine Ausgestaltung der transportablen Wechselstromversorgungsanlage besteht gemäß Anspruch 2 darin, daß die Leerlauffrequenz des Wechselstromgenerators höher als die Frequenz bei einer Leistungsentnahme aus dem Wechselstromgenerator ist. Hierdurch wird die Einsatzbreite des Erfindungsgegenstandes wesentlich erweitert.

Die weitere Ausgestaltung des Erfindungsgegenstandes wird gemäß Anspruch 3 unter Schutz gestellt, daß bei Unterschreiten einer vorgegebenen Leistungsfrequenz für die abzugenbende Dauerleistung mindestens ein Abnehmer abgetrennt wird. Durch die direkte Beeinflussung der Drehzahl des Gleichstommotors bei erhöter Belastung durch die vom Wechselstromgenerator abzugebende Leistung wird durch Abtrennen eines Abnehmers eine deutliche Stabilisierung in der transportablen Wechselstromversorgungsanlage eintreten.

Wird gemäß Anspruch 4 erfindungsgemäß eine wiederaufladbare Gleichstromquelle für die Versorgung des Gleichstromnebenschlußmotors vorgesehen, so verringert sich zwangsläufig die Anzahl der Bereitstellung von Gleichstromquellen. Hierdurch ist es jedoch auch möglich, bei vorgegebener Arbeitszeit während der Ruhezeit die entladene Gleichstromquelle wieder aufzuladen, so daß bei neuem Arbeitsbeginn wieder eine voll einsatzfähige Versorgung des Gliechstromnebenschlußmotors gegeben ist.

An dieser Stelle wird ausdrücklich darauf hingewiesen, daß durch die Versorgung einer erfindungsgemäßen transportablen Wechselstromversorgungsanlage mittels erfinderischem Einsatz eines Gleichstromnebenschlußmotors die Gräuschbelastung derartiger Anlagen praktisch auf Null sinkt. Dies ist insbesondere wichtig bei Notstromversorgungsanlagen in Krankenhäusern und auch bei der Notstromversorgung von Büro - und Geschäftsräumen.

In noch weiterer Augestaltung des Erfindungsgegenstandes wird gemäß Anspruch 5 vorgeschlagen, daß die mindestens eine wiederaufladbare Gleichstromquelle mit einer Einrichtung zur Umsetzung erneuerbarer Energien verbunden ist. Hierdurch wird eine praktisch autarke transportable Wechselstromversorgungsanlage geschaffen, die nicht nur in Dritten-Welt-Ländern, sondern auch für jeden Anwendungsort insbesondere bei Notfällen als praktisch autarke Einrichtung benutzt werden kann. So kann beispielsweise Sonnenenergie für die Wiederaufladung von Gleichstromquellen benutzt werden.

In noch weiterer Ausgestaltung wird gemäß Anspruch 6 unter Schutz gestellt, daß bei mindestens zwei wiederaufladbaren Gleichstromquellen durch einen Umschalter zwischen den Gleichstromquellen die wiederaufgeladene Gleichstromquelle vorrangig den Gleichstromnebenschlußmotor versorgt. Hiermit sind bei hoher Leistungsabgabe des Wechselstromgenerators an Verbraucher Zwangspausen für das Wiederaufladen oder auch Überwachung des Wiederaufladens außerhalb der Arbeitszeit nicht mehr erforderlich.

Gemäß Anspruch 7 wird ein Wechselstromgenerator mit einme Rotor und einem Stator bestehend aus Blechpaketen mit Nuten und in diese gewickelte Spulen für die transportable Wechselstromversorgungsanlage unter Schutz gestellt, der sich dadurch auszeichnet, daß auf dem Rotor aufgeklebte Permanentmagnete als Pole dienen, daß dieselbe Anzahl von in die Nuten des Stators gewickelten Einzelspulen anschließend direkt zu einer Phase zusammengeschaltet als Wicklung dienen, daß diese Wicklung den Rotor umgibt, daß der Stator aus einem Dynamoblechpaket eines entsprechenden Elektromotors besteht, daß die mit Spulen belegbare Nutenfläche des Stators des Wechselstromgenerators größer als die Nutenfläche des entsprechenden Elektromotors ist.

Durch den erfindungsgemäßen Einsatz eines Dynamoblechpakets eines Elektromotors, dessen Nutenflächer größer als die beim entsprechenden Elektromotor ist, wird die für die Wechselstromerzeugung erforderliche Kupfermasse erhöht und damit eine Erwärmung des Wechselstromgenerators auch bei Abgabe der maximalen Wechselstromleistung nicht erhöht und es wird durch das direkte Zusammenschälten der Spulen zu einer Phase die bisher erforderliche Kondensator, welche beide zu beachtlicher Wartung auch zu Störfällen führten, vermieden.

In noch weiterer Ausgestaltung des Erfindungsgegenstandes wird gemäß Anspruch 6 ein Wechselstromgenerator unter Schutz gestellt, der sich dadurch auszeichnet, daß bei einem 4- poligen Wechselstromgenerator mit 90 Grad gegeneinander versetzten auf den drehbaren Anker aufgeklebte Permanentmagnete von zu einer Phase direkt zusammengeschalteten vier Spulen mit einem Luftspalt beabstandet umgeben sind, daß die Spulen in vergrößerte Nutenflächen eines Dynamoblechpaketes eines 2- poligen Elektromotors gewickelt sind, daß die erste und dritte Spule 4- Loch- Wicklung besitzen, daß die zweite und vierte Spule 5- Loch- Wicklung besitzen, daß die erste Spule mit ihrem Ende mit dem Ende der zweiten Spule verbunden ist, daß der Anfang der zweiten Spule mit dem Anfang der dritten Spule verbunden ist, daß das Ende der dritten mit dem Ende der vierten Spule verbunden ist, daß zwischen dem Anfang der ersten Spule und dem Anfang der vierten Spule eine Wechselspannung von 200 Volt bei 50 hz herrscht.

Hierdurch wird trotz unsymetrischer Wicklung der Spulen in der Startwicklung eine symetrische Aufteilung in der Gesamtwicklung erreicht, was zu einer besonders stabilen Bildung einer 50 Hz - Sinusspannung führt.

In noch weiterer Ausgestaltung wird gemäß Anspruch 9 unter Schutz gestellt, daß alle Nuten des Dynamoblechpaketes von der aus 4 Spulen bestehenden Statorwicklung belegt sind. Hierdurch wird der Sinusverlauf der Wechselspannung noch wesendlich verbessert.

In noch weiterer Ausgestaltung des Erfindungsgegenstands, insbesondere nach Anspruch 1 wird in Anspruch 10 unter Schutz gestellt, daß die Gleichstromquelle 200 Ampere' bei 24 Volt abgibt, daß der Gliechstromnebenschlußmotor mit einer Leistung von 4500 Watt bei 2500 Upm über einen Zahnriementrieb mit einer festen Übersetzung den Anker des Wechselstromgenerators mit 1800 Upm im Leerlauf antreibt, daß eine Leerlaufspannung des Wechselstromgenerators von 240 Volt bei 60 hz vorhanden ist, daß der Anker des Wechselstromgenerators mit 4 um 90 Grad gegeneinander versetzen auf den Anker aufgeklebten Magneten versehen ist, daß der Anker einen Außendurchmesser von 108,5 mm und eine Länge von 1300 mm besitzt, daß das in seinen Außenabmessungen einem 2- poligen Elektromotor entsprechende den Anker als Stator umgebende Dynamoblechpaket einen Innendurchmesser von 110 mm, Außendurchmesser von 200 mm und eine Länge von 125 mm und eine Rükkenhöhe von 25 mm besitzt, daß das Dynamoblechpaket 36 Nuten bösitzt und aus 240 Einzelblechen besteht, daß die Fläche einer Nut eines Dynamoblechs zur Aufnahme der Kupfer-wicklungen 151,7 mm$^2$ beträgt im Gegensatz zu einer Nutfläche von 102,9 mm$^2$ beim Einsatz als Dynamoblech bei einem baugliechen 2- poligen Elektromotor, daß 4 unsymetrisch in 4- Loch- und 5- Loch- Wicklung gewickelte Spulen abwechselnd hintereinander einschichtig gewickelt alle Nuten des Dynamoblechs belegen, daß je Nut 15 Leiter vorhanden sind, daß der Leiter einen Kupferquerschnitt von 4,41 mm$^2$ besitzt, daß der Nutenshcritt 1 - 5 und 1 - 6 beträgt, daß durch Reihenschaltung des Endes des ersten Spule mir dem Ende der zwieten Spule, des Anfangs der zweiten Spule mit dem Anfang der dritten Spule, des Endes der dritten Spule mit dem Ende der vierten Spule eine einphasige Wicklung entsteht, daß zwischen dem Anfang der ersten Spule und dem Anfang der vierten Spule eine symetrische Sinuswechselspannung von 240 V 60 Hz im Leerlauf und von 230 V 50 Hz praktisch bei einer Leistungsabgabe von 4000 VA ansteht und abgebbar ist.

Hierdurch wird eine im Lastbereich elastische transportable Wechselstromversorgungsanlage erfindungsgemäß geschaffen, die es ermöglicht, unter Ausnutzung der in den Werkzeugen vorhandenen Motoren zugelassenen Schwankungen im Hinblick auf Frequenz und Spannung als Wechselstromerzeugungsanlage dort eingesetzt zu werden, wo im Falle eines Antriebs einer Wechselstromanlage mit Verbrennungsmotor bereits mindestens ein Wechselstromgenerator höherer Leistung eingesetzt werden müßte.

In Ausgestaltung des Erfindungsgegenstandes nach Anspruch 10 wird in Anspruch 11 unter Schutz gestellt, daß ein Ankerkern aus einem Zylinder mit quadratischem Querschnitt aus Aluminium besteht, daß die Magnete in Nuten des Zylindermantels eingeklebt sind, daß der Ankerkern von einem magnetische nicht leitendem Rohr umgeben ist und daß der Ankerkern im magnitisch nicht leitenden Rohr vergossen ist.

Eine derartige Herstellungsart dient zum einen dem Schutz der Magnete und zum anderen ist hierdurch eine glatte riefenfreie Oberfläche des Ankers gewährleistet.

In noch weiterer Ausgestaltung des Erfindungsgegenstandes wird nach Anspruch 12 unter Schutz gestellt, daß ein nicht rostendes Stahlrohr V2A mit einem Innendurchmesser von 105,8 mm und einem Außendurchmesser von 108,5 mm mit einer Länge von 130 mm vorgesehen ist, daß die symetrisch auf jeder Quadratseite angeordneten Nuten eine Breite im Aluminiumzylinder von je 22,5 mm bei einer Tiefe von 12,5 mm eine Länge von 120 mm besitzen und daß in diesen Nuten ein Magnet von einer Breite 20 mm Tiefe 12 mm und einer Länge 120 mm eingesetzt ist. Daß die über jede Quadratseite hiausragende maximale Höhe des Magneten 20 mm bei einer Breite von 52 mm beträgt und daß der Magnet eine Länge von 120 mm besitzt und daß die oberen Kanten der Magnete abgeschrägt sind.

Insbesondere durch die Abschrägung der Magnete wird ein praktisch gleichmäßiges symestrisches Magnetfeld, welches aus vier Polen besteht, erzeugt.

In noch weiterer Ausgestaltung des Erfindungsgegenstandes wird in Anspruch 13 unter Schutz gestellt, daß die Magnete aus Semarium- Cobald und Neodym-Eisen- Bor ND Fe B 235/ 160 h bestehen.

Derartige Magnete sind besonders geeignet für die erfindungsgemäße transportable Wechselstromversorgungsanlage.

In noch weiterer Ausgestaltung des Erfindungsgegenstandes wird in Anspruch 14 unter Schutz gestellt, daß für eine Magnetlänge Oberschicht von 120 mm Teilmagnete vorgesehen sind und für eine Magnetlänge Unterschicht von 120 mm 2 Teilmagnete vorgesehen sind.

Durch das Verkleben zu einer Gesamtlänge von 120 mm wird eine Beeinflussung des Magnetfeldes nicht hervorgerufen.

In noch weiterer Ausgestaltung des Erfindungsgegenstandes wird gemäß Anspruch 15 unter Schutz gestellt, daß ein über Schließerkontaktebetätigbare automatische Fremdbelüftung vorgesehen ist.

Hierdurch wird die Sicherheit des Erfindungsgegenstandes noch weiter erhöht.

In der nachfolgenden Beschreibung wird die Erfindung anhand eines chematisch dargestellten Ausführungsbeispiels erläutert:

Es zeigen

Figur 1 :        eine erfindungsgemäße transportable Wechselstromversorgungsanlage mit Gleichstrombatterie einschließlich Gleichstromversorgungteil.

Figur 2 :        ein elektrisches Schaltbild eines erfindungsgemäßen Gleichstromantriebs für einen erfindungsgemäßen Wechselstromgenerator.

Figur 2a :      den zeitlichen Verlauf eine vom Generator abgegebenen sinusförmigen Spannung (27) im Vergleich mit dem sinusförmigen Verlauf der Netzspannung (26) bei 230 V.

Figur 3 :        ein Dynamoblech eines Blechpakets zur Aufnahme der Statorwicklung mit 36 Nuten.

Figur 4 :        einen aus mehreren Teilstücken zusammengeklebten Magneten.

Figur 4a :      einen aus zwei Teilstücken zusammengeklebten Magneten.

Figur 5 :        einen Ankerkern mit eingeklebten Magneten und einen nicht magnetischen Kühlrohr.

Figur 6 :        ein Wicklungsschaltbild des Wechselstromgenerators
                 und

Figur 7 :        eine automatische Fremdbelüftung für eine transportable Wechselstromversorgungsanlage.

In der nachfolgenden Zeichnung werden gleiche Bauteile mit den selben Bezugsziffern bezeichnet.

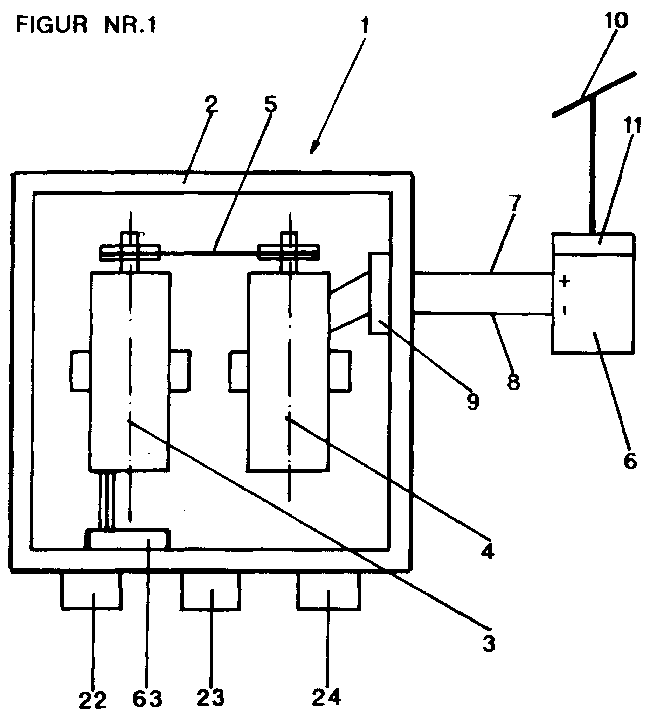

Gemäß Figur 1 besteht eine transportable Wechselstromversorgungsanlage 1 aus einem Gehäuse 2, in welchem ein Wechselstromgenerator 3 angeordnet ist, der von einem Gleichstromnebenschlußmotor 4 über einen Zahnriementrieb 5 in einem festen Übersetzungsverhältnis angetrieben wird.

Gemäß Figur 1 ist eine Gleichstromquelle 6, bei welcher es sich um eine Gleichstrombatterie handeln kann, außerhalb des Gehäuses 2 angeordnet und es wird über Zuleitungen 7,8 Gleichstrom dem Gleichstromnebenschlußmotor über einen Sicherungskasten 9 zugeleitet. Der Sicherungskasten enthält gleichzeitig auch Sicherungselemente, um den Antrieb des Wechselstromgenerators 3 zu unterbrechen, wenn beispielsweise eine zu geringe Gleichspannung anliegt oder auch um zu verhindern, daß der Gleichstromnebenschlußmotor mit einer Wechselstromquelle verbunden wird.

In Figur 1 ist darüberhinaus eine mit Sonnenenergie betreibbare Umsetzeinrichtung 10 vorgesehen, welche über ein Eingangsglied 11 in der Lage ist, die Gleichstromquelle 6 entweder ständig nachzuladen oder auch bei Vorhandensein von mindestens 2 Gleichstromquellen 6 jeweils die nicht benutzte Gleichstromquelle 6 mit Gleichstrom aufzuladen, damit diese dann vorrangig die Versorgung des Gleichstromnebenschlußmotors 4 übernimmt.

Anstelle einer derartigen Anordnung ist es jedoch auch im Rahmen der Erfindung möglich, die Gleichstromquelle 6 als herausnehmbare Einheit im Gehäuse 2 selbst anzuordnen und bei Bedarf herauszunehmen oder über nicht dargestellte Verbindungsleitungen ebenfalls mit der Umsetzeinrichtung 10, welche Sonnenenergie in Gleichspannung umsetzt, zu verbinden.

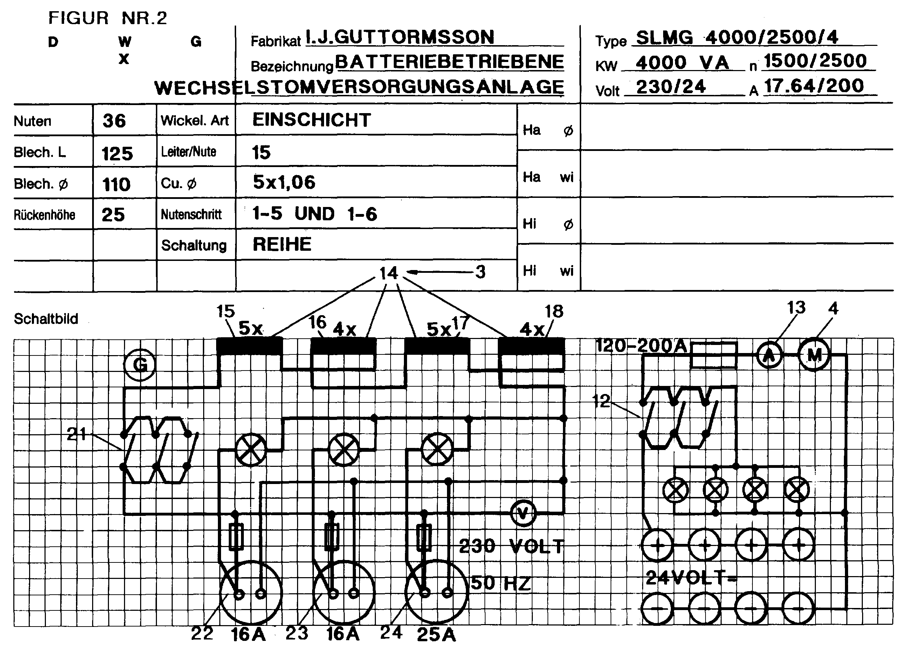

In Figur 2 wird ein Schaltbild eines Gleichstromantriebs für einen Wechselstromgenerator dargestellt und gleichzeitig auch das Schaltbild für den Wechselstromgenerator.

Von der nicht dargestellten Gleichstromquelle, welche eine Leistung von 200 Ampere' aufweist bei einer Spannung von 24 V, wird der Gleichstromnebenschlußmotor 4 direkt an die Negativspannung angeschlossen, während die positive Spannung über einen Schalter 12 im Nebenschluß dem Motor zugeleitet wird, so daß eine Drehzahl von 2500 Umdrehungen am Anker 13 abgenommen werden kann.

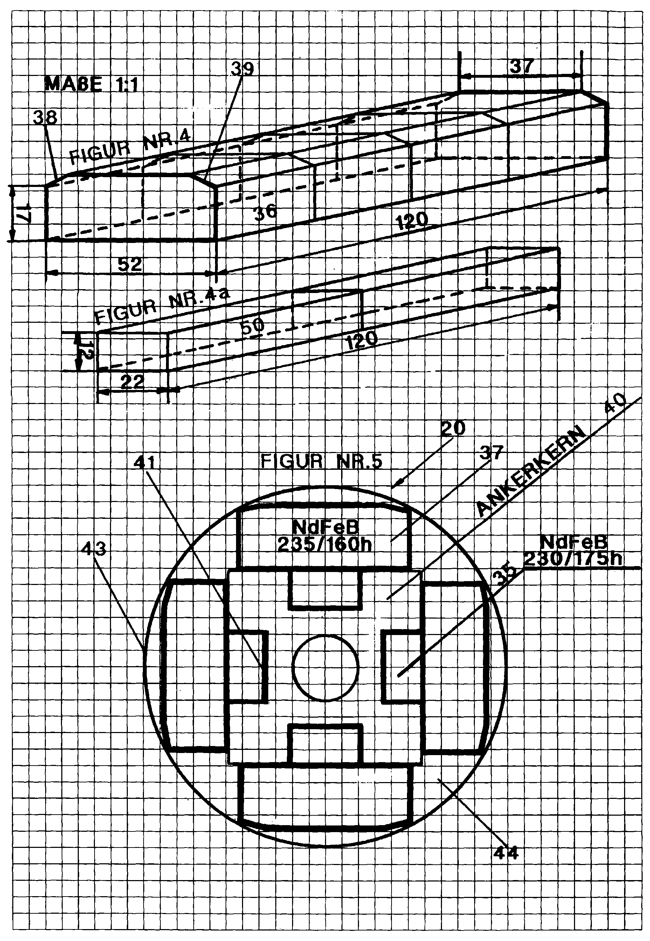

Der Wechselstromgenerator 3 besitzt eine Statorwicklung 14, welche im vorliegenden Falle aus einer ersten Spule 15, welche in 5- Loch- Wicklung gewickelt ist, eine zweite Spule 16, welche in 4- Loch- Wicklung gewickelt ist, eine dritte Spule 17, welche in 5- Loch-Wicklung gewickelt ist, und eine Spule 18, welche in 4-Loch- Wicklung gewickelt ist. Die Spulen 15,16, 17 und 18 sind hierbei in Reihe folgendermaßen zusammengeschaltet: das Ende der Spule 15 ist mit dem Ende der Spule 16 verbunden, während der Anfang der Spule 16 mit dem Anfang der Spule 17 verbunden ist, während das Ende der Spule 17 mit dem Ende der Spule 18 verbunden ist. Hierdurch entsteht trotz 5- und 4- Loch - Wicklungsart bei diesen in Reihe zuzammengeschalteten Spulen eine Ausgangsfrequenz von 50 Hz bei einer Lastspannung von 230 V, wenn dafür Sorge getragen ist, daß die Statorwicklung 14 einen in Figur 5 näher beschriebenen Generatoranker 20 umschließt, welcher vom Anker 13 über den Zahnriementrieb mit einer Drehzahl von 1800 Upm angetrieben wird.

Im Sicherungskasten 63 befindet sich die Absicherung des Generators. Um dem Wechselstromgenerator 3 Strom entnehmen zu können, ist ein Einschalter 21 vorgesehen. Nach dem Einschalten kann an Steckdosen 22, 23, 24 je nach deren Absicherung Strom für Arbeitsgeräte, die eine Spannung von 230 V und 50 Hz haben, entnommen werden. Ist beispielsweise die Steckdose 24 mit 25 Ampere' abgesichert, so kann an diese Steckdose ohne weiteres ein Winkelschleifer mit einer Leistung bis zu 4000 VA angeschlossen werden und zwar im Dauerbetrieb.

In Figur 2 a ist eine Kurve 26 und eine weitere Kurve 27 dargestellt und zwar deren Spannungsverlauf in Abhängigkeit gezeigt. Die Kurve 26 stellt den Verlauf einer Sinuswechselspannung aus dem Netz dar, während die weitere Krve 27 die Wechselspannung aus der transportablen Wechselstromversorgungsanlage zeigt. Aus dem Vergleich dieser beiden Spannungsverläufe, die sowohl im Anstieg und auch in ihrem Abstieg identisch sind, und bei welchem sie lediglich maximal und minimal geringfügig unterschiedlich ausgebildet sind, zeigen, daß hiermit ohne weiteres eine ausgezeichnete Wechselstromversorgung durch die erfindungsgemäße transportable Wechselstromversorgungsanlage ermöglicht wird.

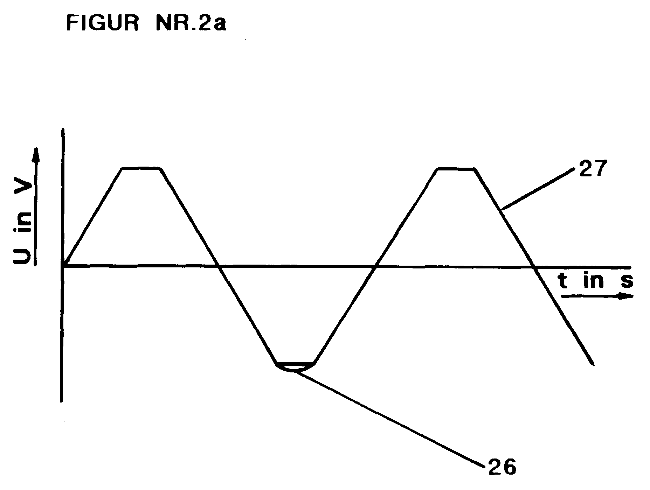

Figur 3 stellt ein Dynamoblech 30 dar, welches zu einem Blechpaket zur Aufnahme der gesamten Statorwicklung ausgebildet ist.

Das Dynamoblech besitzt Nuten 31. Im vorliegenden Fall sind 36 Nuten am Innenumfang des Dynamoblechs 30 vorgesehen, wobei jede Nut 31 einen Querschnitt von 151,7 mm$^2$ besitzt. Zwischen Nutengrund 32 und Außendurchmesser 33 des Dynamoblechs 30 ist ein Abstand 34 vorhanden. Dieser Abstand wird Rückenhöhe genannt und stellt ein Maß für den Blechquerschnitt eines Dynamoblechs dar.

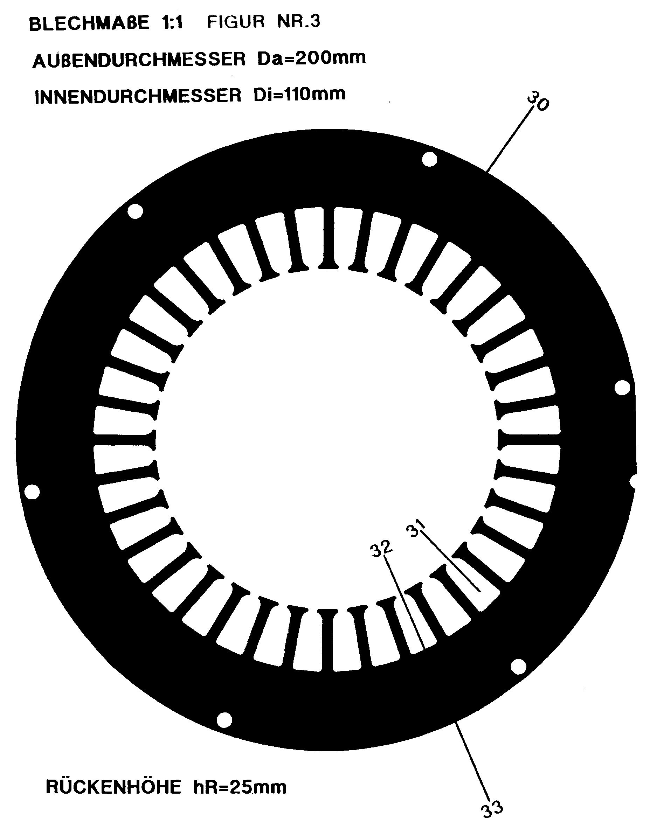

In Figur 4 wird eine aus Einzelelementen 36 zusammengeklebter Polmagnet 37 dargestellt. Insbesondere bei den erfindungsgemäß eingesetzten Semarium-Cobald und Neodym-Eisen-Bor Nd fe B 235/160 h bestehenden Polmagneten ist zufolge der hohen Verarbeitungsgenauigkeit eine derartige Stückelung in Einzelelemente möglich and angebracht. Derartig in Achsrichtung verklebte Polmagnete 37 besitzt Abschrägungen 38, 39 zwischen ihrem vertikalen und horizontalen Randbegrenzungen.

In Figur 4a wird eine aus Einzelelementen 50 zusammengeklebter Polmagnet 35 dargestellt. Erfindungsgemäß eingesetzten Semarium- Cobald und Neodym-Eisen- Bor Nd fe B 230/175 h.

Figur 5 besitzt einen zylindrischen Ankerkern 40 mit quadratischem Querschnitt an seinen Außenseiten U- förmige Haltenuten 41, in welche Polmagneten 35 eingeklebt und Polmagneten 37 aufgeklebt werden.

Der zylindrische Ankerkern wird nunmehr in nicht magnetisierbares Rohr 43 symetrisch eingelegt und anschließend mit Vergußmasse 44 vergossen.

Ein derartiger Generatoranker 20 wird nunmehr im Abstand von wenigen Millimetern innerhalb der Dynamobleche rotierbar angeordnet und erzeugt zufolge Rotation seiner 4 Polmagnete 37/35beiRotation mit 1800 Upm eine Wechselstromspannung von 240 V mit einer Frequenz von 60 Hz, wenn die unsymetrisch gewickelten Spulen 15 - 18 in Reihe zu einer Phase hintereinander zuzammengeschaltet sind.

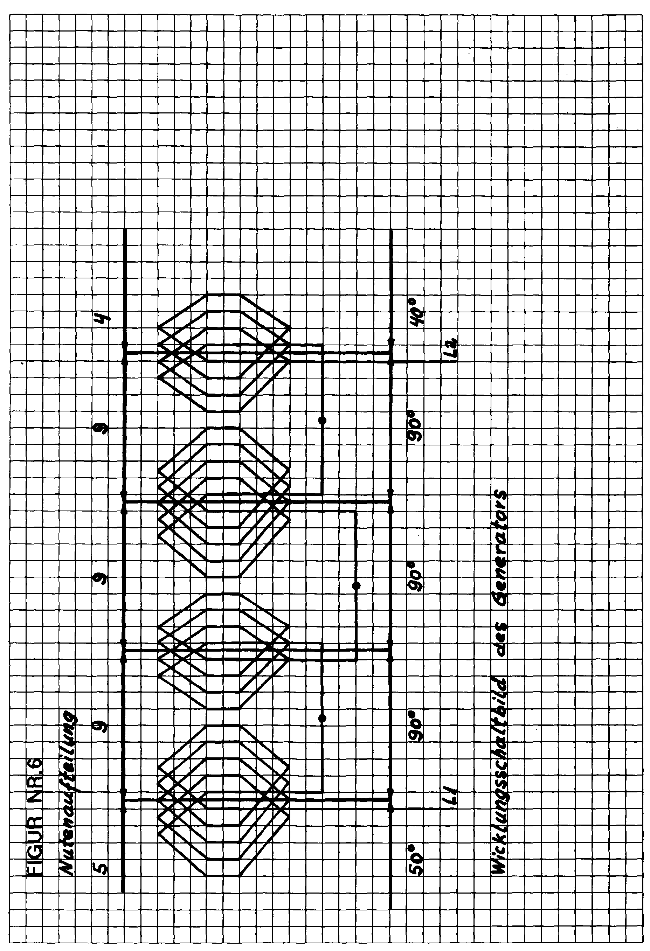

Auch aus dem in Figur 6 dargestellten Wicklungsschaltbild läßt sich erkennen, daß trotz ungleichförmiger Wicklung jeweils gleichförmig Wicklungsanteile mit je 9 Nuten auftreten und 4 Pole die jeweils 90° haben, wenn ein Dynamoblech 30 mit 36 Nuten am Innenumfang benutzt wird.

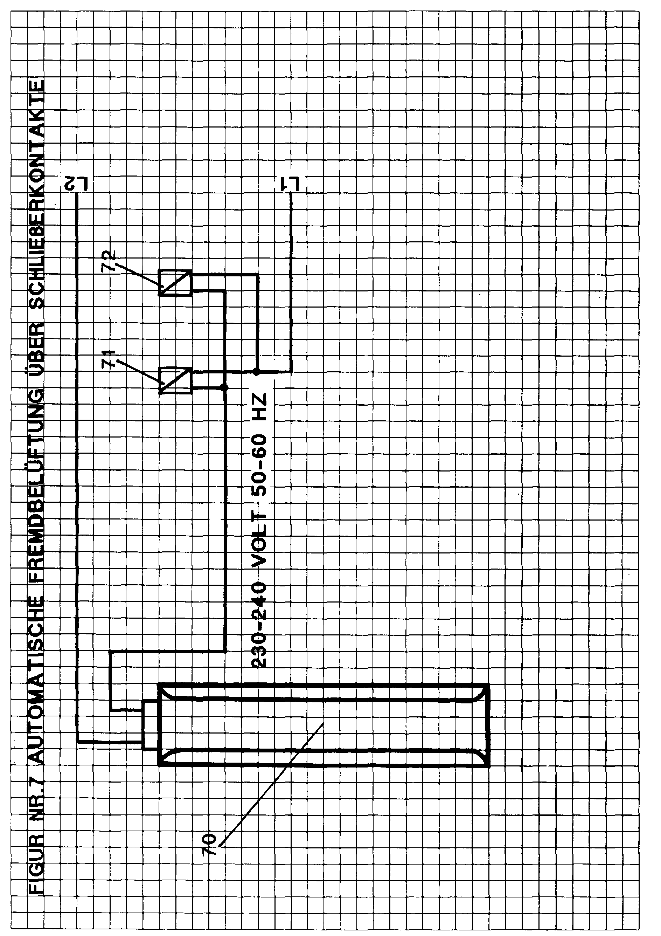

In Figur 7 ist eine automatische Fremdbelüftung 70 über Schließerkontakte 71 und 72 mit 230 - 240 Volt 50 - 60 Hz dargestellt.

**Patentansprüche**

1. Transportable Wechselstromversorgungsanlage, bestehend aus einem einen Anker eines Wechselstromgenerators mit einer aus Spulen bestehenden Statorwicklung antreibenden Motor, dadurch gekennzeichnet,

   - daß ein von einer Gleichstromquelle (6) gespeister Gleichstromnebenschlußmotor (4) den Anker (20) eines Wechselstromgenerators (3) mittels Übersetzungsgetriebe (5), insbesondere Zahnriemenbetrieb, mit einer Übersetzung 1,166 antreibt, - daß die Anzahl der Pole des Ankers(20) gleich ist der Anzahl der Pole des diesen umgebenden Stators.
   - daß die Spulen ( 15, 16, 17, 18 ) der Statorwicklung (14) direkt zu einer Phase zusammengeschaltet sind, und - daß der Wechselstromgenerator (3) an seinem elektrischen Ausgang eine Wechselspannung mit praktisch gleicher Frequenz bei vorgegebener Dauerleistung zur Verfügung hält.

2. Transportabel Wechselstromversorgungsanlage nach Anspruch 1 ,dadurch gekennzeichnet, daß die Leerlauffrequenz des Wechselstromgenerators (3) höher als die Frequenz bei Leistungsentnahme ist.

3. Transportable Wechselstromversorgungsanlage nach anspruch 1 und/oder 2, dadurch gekennzeichnet, daß bei Unterschreiten einer vorgegebenen Leistungsfrequenz für die abzugebende Dauerleistung mindestens ein Abnehmer ( 22 oder 23 oder 24 ) abgetrennt wird.

4. Transportable Wechselstromversorgungsanlage nach einem oder mehreren der vorhergehenden Ansprüche, dadurch gekennzeichnet, daß mindestens eine wiederaufladbare Gleichstromquelle (6) vorgesehen ist.

5. Transportable Wechselstromversorgungsanlage nach Anspruch 4, dadurch gekennzeichnet, daß die mindestens eine wiederaufladbare Gleichstromquelle (6) mit einer Einrichtung 10 zur Umsetzung erneuerbarer Energien verbunden ist.

6. Transportable Wechselstromversorgungsanlage nach Anspruch 4 und/oder 5, dadurch gekennzeichnet, daß bei mindestens zwei wiederaufladbaren Gleichstromquellen durch einen Umschalter zwischen den Gleichstromquellen die wiederaufgeladene Gleichstromquelle vorrangig den Gleichstromnebenschlußmotor (4) versorgt.

7. Wechselstromgenerator mit einem Rotor und einem Stator, bestehend aus Blechpaket mit Nuten und in diesen gewickelte Spulen für die Wechselstromversorgungsanlage nach einem oder mehreren der Ansprüche 1 - 6, dadurch gekennzeichnet, daß auf dem Rotor aufgeklebte Permanentmagnete (35) und (37) als Pole dienen, daß dieselbe Anzahl von in die Nuten des Stators gewickelte Einzelspulen ( 15,16,17,18) anschließend direkt zu einer Phase zusammengeschaltet als Wicklung dienen, daß diese Wicklung den Anker (20) umgibt, daß der Stator aus einem Dynamoblechpaket eines entsprechenden Elektromotors besteht, daß die mit Spulen belegbare Nutenfläche des Stators des Wechselstromgenerators (3) größer als die Nutenfläche des entsprechenden Elektromotors ist.

8. Wechselstromgenerator nach einem oder mehreren der vorhergehenden Ansprüche, dadurch gekennzeichnet, daß bei einem 4- poligen Generator mit 90 Grad versetzten auf dem drehbaren Anker aufgeklebten Permanentmagneten und von zu einer Phase direkt zusammengeschalteten 4 Spulen mit einem Luftspalt beabstandet umgeben sind, daß die Spulen in vergrößerten Nutenflächen eines Dynamoblechpakets eines 2- poligen Elektromotors gewickelt sind, daß die erste und die dritte Spule 4- Loch- Wicklung besitzt, daß die zweite und vierte Spule 5- Loch-Wicklung besitzt, daß die erste Spule mit ihrem Ende mit dem Ende der zweiten Spule verbunden ist, daß der Anfang der zweiten Spule mit dem Anfang der dritten Spule verbunden ist, daß das Ende der dritten Spule mit dem Ende der vierten Spule verbunden ist, daß zwischen dem Anfang der ersten Spule und dem Anfang der vierten Spule eine Spannung von praktisch 230 V bei 50 hz herrscht.

9. Wechselstromgenerator nach Anspruch 7 und/oder 8, dadurch gekennzeichnet, daß alle Nuten des Dynamoblechpaketes von der aus 4 Spulen bestehenden Wicklung belegt sind.

10. Transportable Wechselstromversorgungsanlage, gestehend aus einem einen Anker eines Wechselstromgenerators mit einer aus Spulen bestehenden Statorwicklung antreibenden Motor insbesondere nach Anspruch 1, dadurch gekennzeichnet, daß die Gleichstromquelle (6) 200 Ampere' bei 24 V abgibt, daß der Gleichstromnebenschlußmotor (4) mit einer Leistung von 4500 Watt bei 2500 Upm über einen Zahnriementrieb (5) mit einer festen Übersetzung den Anker (20) des Wechselstromgenerators (3) mit 1800 Upm im Leerlauf antreibt, daß eine Leerlaufspannung des Wechselstromgenerators (3) von 240 Volt bei 60 Hz herrscht, daß der Anker (20) des Wechselstromgenerators mit 90 Grad gegeneinander versetzten aufgeklebten Magneten (35) und (37) versehen ist, daß der Anker (20) ein Außendurchmesser von 108,5 mm und eine Länge von 130 mm besitzt, daß das in seinen Außenabmessungen einen 2- poligen Elektromotor entsprechen, den Anker als Stator umgebende Dynamoblechpaket, einen Innendurchmesser von 110 mm, einen Außendurchmesser von 200 mm eine Länge von 125 mm und eine Rückenhöhe von 25 mm besitzt, daß das Dynamoblechpaket 36 Nuten besitzt und aus 240 Einzelblechen (30) besteht, daß die Fläche einer Nut (31) eines Dynamoblechs (30) zur Aufnahme der Kupferwicklungen 151,7 mm$^2$ beträgt, im Gegensatz zu einer Nutenfläche von 102,9 mm$^2$ beim Einsatz als Dynamoblech bei einem baugleichen 2- poligen Elektromotor, daß 4 unsymetrisch in 4- Loch- und 5- Loch- Wicklung gewickelte Spulen (15, 16, 17, 18) abwechselnd hintereinander einschichtig gewickelt alle Nuten (31) des Dynamoblechpaketes belegen, daß je Nut (31) 15 Leiter vorhanden sind, daß der Leiter einen Kupferquerschnitt von 4,41 mm$^2$ besitzt, daß der Nutenschritt 1 - 5 und 1 - 6 beträgt, daß durch Reihenschaltung des Endes der ersten Spule (15) mit dem Ende der zweiten Spule (16) des Anfangs der zweiten Spule (16) mit dem Anfang der dritten Spule (17), des Endes der dritten Spule (17) mit dem Ende der vierten Spule (17) eine einphasige Wicklung (14) entsteht daß zwischen dem Anfang der ersten Spule (15) und dem Anfang der vierten Spule (18) eine symetrische Sinuswechselspannung von 240 Volt und 60 Hz im Leerlauf und von praktisch 230 V 50 Hz bei einer Leistungsabgabe von 4000 VA ansteht und abgebbar ist.

11. Transportable Wechselstromversorgungsanlage nach Anspruch 10, dadurch gekennzeichnet, daß ein Ankerkern (40) aus einem Zylinder mit quadratischem Querschnitt aus Aluminium besteht, daß die Magnete in Nuten des Zylindermantels eingeklebt und aufgeklebt sind, daß der Ankerkern (40) von einem nicht magnetisierbarem Rohr (43) umgeben ist und daß der Ankerkern (40) im magnetisch nicht leitenden Rohr (43) vergossen ist.

12. Transportable Wechselstromversorgungsanlage nach 10 und/oder 11, dadurch gekennzeinet, daß ein Wanadiumrohr ( V2A) mit einem Innendurchmesser von 105,8 mm und einem Außendurchmesser von 108,5 mm mit einer Länge von 130 mm vorgesehen ist, daß die symetrisch auf jeder Quadratseite angeordneten U- förmigen Haltenuten (41) eine Breite von je 22,5 mm bei einer Tiefe von 12,5 mm und einer Länge von 130 mm besitzen und daß die über jede Quadratseite hinausragende maximale Höhe des Magneten 20 mm bei einer Breite von 52 mm beträgt und daß der Magnet eine Länge von 120 mm besitzt und daß die oberen Kanten des Magneten abgeschrägt ( 38, 39) sind.

13. Transportable Wechselstromversorgungsanlage nach einem oder mehreren der vorhergehenden Ansprüche, dadurch gekennzeinet daß die Magnete (37) aus Semarium- Cobald und Neodym- Eisen- Bor Nd Fe B 235/160 h und Magnete (35) aus Semarium- Cobald und Neodym- Eisen- Bor Nd Fe B 230/175 h bestehen.

14. Transportable Wechselstromversorgungsanlage nach Anspruch 13, dadurch gekennzeichnet, daß für eine Magnetlänge von 120 mm 4 Teilmagnete (36) und 2 Teilmagnete (50) für eine Magnetlänge von 120 mm vorgesehen sind.

15. Transportable Wechselstromversorgungsanlage nach einem oder mehreren der vorhergehenden Ansprüche, dadurch gekennzeichnet, daß eine über Schließerkontakte betätigbare automatische Fremdbelüftung vorgesehen ist.

FIGUR NR.1

# FIGUR NR.2

D    W    G
X

| | | | | | |
|---|---|---|---|---|---|
| Fabrikat | **I.J.GUTTORMSSON** | | Type | **SLMG 4000/2500/4** | |
| Bezeichnung | **BATTERIEBETRIEBENE** | | KW | **4000 VA** | n **1500/2500** |
| | **WECHSELSTOMVERSORGUNGSANLAGE** | | Volt | **230/24** | A **17.64/200** |

| | | | | | |
|---|---|---|---|---|---|
| Nuten | **36** | Wickel. Art | **EINSCHICHT** | Ha | ⌀ |
| Blech. L | **125** | Leiter/Nute | **15** | | |
| Blech. ⌀ | **110** | Cu. ⌀ | **5x1,06** | Ha | wi |
| Rückenhöhe | **25** | Nutenschritt | **1-5 UND 1-6** | Hi | ⌀ |
| | | Schaltung | **REIHE** | | |
| | | | 14 ← 3 | Hi | wi |

Schaltbild

15 **5x**   16 **4x**   **5x** 17   18 **4x**   **120-200A**

**230 VOLT**
**50 HZ**

**24VOLT=**

22 **16A**   23 **16A**   24 **25A**

EP 0 982 840 A1

# FIGUR NR.2a

BLECHMAßE 1:1   FIGUR  NR.3

AUßENDURCHMESSER  Da=200mm

INNENDURCHMESSER  Di=110mm

RÜCKENHÖHE  hR=25mm

MABE 1:1

FIGUR NR.4

FIGUR NR.4a

FIGUR NR.5

ANKERKERN

NdFeB 235/160h

NdFeB 230/175h

FIGUR NR.6

Nutenaufteilung

Wicklungsschaltbild des Generators

EP 0 982 840 A1

FIGUR NR.7 AUTOMATISCHE FREMDBELÜFTUNG ÜBER SCHLIEBERKONTAKTE

230-240 VOLT 50-60 HZ

Europäisches
Patentamt

**EUROPÄISCHER RECHERCHENBERICHT**

Nummer der Anmeldung

EP 98 11 5473

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP 0 666 633 A (YANG TAI HER) 9. August 1995 * Spalte 2, Zeile 21 - Zeile 33; Abbildung 1 * --- | 1,4 | H02K47/04 H02K3/28 H02K1/27 |
| A | US 4 703 621 A (BARRETT WILFORD C) 3. November 1987 * Spalte 2, Zeile 14 - Zeile 43; Abbildung 1 * --- | 1,4 | |
| A | US 4 019 119 A (NABER JOSEPH S) 19. April 1977 Abstract ----- | 1 | |

| | RECHERCHIERTE SACHGEBIETE (Int.Cl.6) |
|---|---|
| | H02K |

Der vorliegende Recherchenbericht wurde für alle Patentansprüche erstellt

| Recherchenort | Abschlußdatum der Recherche | Prüfer |
|---|---|---|
| DEN HAAG | 22. Januar 1999 | Zoukas, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 98 11 5473

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-01-1999

| Im Recherchenbericht angeführtes Patentdokument | Datum der Veröffentlichung | Mitglied(er) der Patentfamilie | | Datum der Veröffentlichung |
|---|---|---|---|---|
| EP 0666633 A | 09-08-1995 | GB | 2275377 A,B | 24-08-1994 |
| | | US | 5476293 A | 19-12-1995 |
| | | DE | 69411697 D | 20-08-1998 |
| | | ES | 2118322 T | 16-09-1995 |
| US 4703621 A | 03-11-1987 | US | 4718233 A | 12-01-1988 |
| US 4019119 A | 19-04-1977 | AT | 362024 B | 27-04-1981 |
| | | AT | 275276 A | 15-09-1980 |
| | | CA | 1039350 A | 26-09-1978 |
| | | DE | 2616138 A | 28-10-1976 |
| | | FR | 2308238 A | 12-11-1976 |
| | | GB | 1509825 A | 04-05-1978 |
| | | SE | 7604422 A | 18-10-1976 |

EPO FORM P0461

Für nähere Einzelheiten zu diesem Anhang : siehe Amtsblatt des Europäischen Patentamts, Nr.12/82